# EUROPÄISCHE PATENTANMELDUNG

(11) **EP 0 646 469 A2**
(43) Veröffentlichungstag der Anmeldung: **05.04.1995**
(21) Anmeldenummer: 94113781.2
(22) Anmeldetag: 02.09.1994
(51) Int. Cl.: B41J 15/16, F16D 7/02

(54) **Druckmaschine**

(30) Priorität: 24.09.1993 DE 4332562; 24.09.1993 DE 4332625
(71) Anmelder: ESSELTE METO INTERNATIONAL GmbH, D-64636 Heppenheim (DE)
(72) Erfinder: Umbach, Dirk, D-45525 Hattingen (DE); Schneider, Peter, D-69151 Neckargemünd (DE)

(57) **Zusammenfassung**

Die Erfindung bezieht sich auf eine Druckmaschine mit einem an eine Gegendruckrolle (108) federbelastet andrückbaren Druckkopf (109), zwischen dem und der Gegendruckrolle (108) das wirksame Trum (107) eines Druckbands (104) und ein zu bedruckender Aufzeichnungsträger durchlaufen. Das Druckband (104) wird von einer ersten Spule (101) abgewickelt und auf eine zweite Spule (103) aufgewickelt, und zwischen einem Antrieb (117) und die zweite Spule (103) und/oder zwischen einem Antrieb (117) und einer am Aufzeichnungsträger anliegenden Antriebsrolle ist eine Rutschkupplung (115) geschaltet, die in einem Rad (2) mit einer konzentrischen Welle (1) angeordnet ist. Zwischen der Welle (1) und dem Rad (2) ist wenigstens ein Paar axial federbelasteter Reibscheiben (5,6) geschaltet. Als vorteilhafte Kupplung wird vorgeschlagen, daß das Rad (2) als öffenbarer Hohlkörper ausgebildet ist, daß sich alle Elemente (5,6,7) der Rutschkupplung (115) im Innern des Rades (2) befinden, und daß die Welle (1) in die Rutschkupplung (115) einsteckbar ist, wobei die wenigstens eine wellenseitige Reibscheibe (5) formschlüssig mit der Welle (1) verbindbar ist.

## Beschreibung

Die Erfindung bezieht sich auf eine Druckmaschine mit einem an eine Gegendruckrolle federbelastet andrückbaren Druckkopf, zwischen dem und der Gegendruckrolle das wirksame Trum eines Druckbands und ein zu bedruckender Aufzeichnungsträger durchlaufen, wobei das Druckband von einer ersten Spule abgewickelt und auf eine zweite Spule aufgewickelt wird, und zwischen einem Antrieb und die zweite Spule und/oder zwischen einem Antrieb und einer am Aufzeichnungsträger anliegenden Antriebsrolle eine Rutschkupplung geschaltet ist, die in einem Rad mit einer konzentrischen Welle, auf die ein Drehmoment übertragen wird, angeordnet ist, und wobei zwischen die Welle und das Rad wenigstens ein Paar axial federbelasteter Reibscheiben geschaltet ist.

Bei Druckmaschinen, wie beispielsweise bei Thermotransferdruckmaschinen, erweist es sich als notwendig, mittels einer Rutschkopplung das Drehmoment zu begrenzen, das auf die Spule einwirkt, auf die das verbrauchte Farbband (Thermotransferband) aufgewickelt wird. Dabei verhindert die Rutschkupplung eine unzulässig hohe Zugspannung im Band. Eine solche kann bspw. auftreten, wenn man die Spule von welcher das Band abgewickelt wird aus irgendwelchen Gründen abstoppt, wobei das Abstoppen durchaus schlagartig erfolgen kann. Das Reißen des Bandes kann dabei nur mit Hilfe einer solchen Rutschkupplung verhindert werden.

Außerdem kann es sich als notwendig erweisen, den Aufzeichnungsträger - beispielsweise beim Bedrucken einzelener Etiketten - statt mit der oder zusätzlich zur Gegendruckrolle mit einer separaten Antriebsrolle zu transportieren, um einen ordnungsgemäßen Vorschub zu erreichen. Auch hier ist insbesondere im Fehlerfall eine Begrenzung des Antriebsmoments der Antriebsrolle erforderlich, um eine Beschädigung des Antriebsmotors oder anderer mechanischer Elemente zu vermeiden.

Rutschkupplungen gattungsgemäßer Art sind bspw. als Lamellenkupplungen bekannt und weit verbreitet. Wenn das Drehmoment einen vorbestimmten, durch die Wahl der Reibpaarung und die Kraft der Belastungsfeder oder -federn festgelegten Wert überschreitet, so wird die Haftreibung überwunden und die Kupplung dreht durch. Im Extremfalle dreht sich dann bspw. lediglich noch die angetriebene Welle, während das Rad stillsteht oder umgekehrt.

Eine dem Erfinder bekannte Kupplung der gattungsgemäßen Art wird Stück für Stück auf der Welle zusammengebaut. Wenn es sich dabei um eine sehr kleine Rutschkupplung handelt, deren Bestandteile infolgedessen auch klein sind, so ist der Zusammenbau mühsam und zeitaufwendig. Wenn sich diese Welle mit Kupplung in einer Maschine befinden und dort beengte Platzverhältnisse herrschen, so ist die Wartung und Reparatur dieser Kupplung, bspw. Auswechseln der Reibscheiben, besonders zeitaufwendig und infolgedessen teuer. Hierbei ist es dann ohne weiteres möglich, daß eine der kleinen Reibscheiben in die Maschine fällt und es infolgedessen zu einer Störung der gesamten Maschine kommen kann.

Es liegt nunmehr die Aufgabe vor, eine Druckmaschine der eingangs beschriebenen Art so weiterzubilden, daß ihre Rutschkopplung einfach im Aufbau, problemlos in der Montage und Demontage sowie von geringem Platzbedarf ist. Darüberhinaus soll diese Kupplung natürlich auch preiswert herzustellen sein.

Zur Lösung dieser Aufgabe wird erfindungsgemäß vorgeschlagen, daß die eingangs beschriebene Druckmaschine entsprechend den kennzeichnenden Merkmalen des Hauptanspruchs ausgebildet ist.

Der Begriff "Rad" ist hierbei in weitestem Sinne zu verstehen, d.h. es handelt sich insoweit ganz allgemein um einen drehbar gelagerten Körper, dessen geometrische Drehachse mit der geometrischen Achse der Welle zusammenfällt. Aus dem Vorstehenden folgt auch, daß jedes Reibscheibenpaar aus einer drehfest mit der Welle verbundenen Reibscheibe und einer drehfest mit dem Rad verbundenen Reibscheibe besteht, wobei die beiden Reibscheiben, zumindest was ihre aneinander anliegenden Flächen betrifft, in der Regel unterschiedliche Reibwerte aufweisen. Es versteht sich auch ohne weiteres, daß man wahlweise das Rad oder die Welle direkt oder indirekt mit dem Antriebsmotor verbinden kann. Insbesondere kann man die Welle mit der Spule zum Aufwickeln des Bandes verbinden.

Das Rad ist dabei ein öffenbarer Hohlkörper, welcher zugleich das Gehäuse der Rutschkupplung bildet und sämtliche Elemente der Kupplung, also alle Reibscheiben und die Belastungsfeder oder -federn aufnimmt, wobei letztere bei geschlossenem Hohlkörper gespannt sein muß bzw. müssen. Wenn dies der Fall ist, läßt sich die Rutschkupplung getrennt von der Welle komplett vormontieren. Es bedarf dann lediglich noch des zentrischen Einsteckens der Welle in diese Rutschkupplung, wobei die formschlüssige Verbindung der Welle mit der oder den wellenseitigen Reibscheiben automatisch durch das Einstecken der Welle erfolgen muß. Dies setzt natürlich voraus, daß die Welle und die wellenseitige Reibscheibe oder -scheiben beim Zusammenstecken eine vorbestimmte Drehausrichtung aufweisen müssen. Dies ist aber, wie die Praxis zeigt, keinerlei Problem. Insofern kann man eine derartige Rutschkupplung in jede Maschine auch dann einbauen, wenn beengte Platzverhältnisse gegeben sind. Dasselbe gilt auch für das Ausbauen, wobei nunmehr eine Reparatur, insbesondere ein Austausch der Reibscheiben oder Feder, außerhalb dieser Maschine erfolgen kann und somit keine Gefahr besteht; daß Teile der Rutschkupplung in die Maschine fallen. Die Welle kann in der Maschine verbleiben.

Eine besonders vorteilhafte Ausführungsform der Erfindung ergibt sich aus Anspruch 2. Sie trägt dazu bei, daß man durch bloßes Einstecken der Welle in diese Rutschkupplung sofort die formschlüssige Verbindung der Welle mit der oder den wellenseitigen Reibscheiben erreichen kann. Es sind keinerlei weitere Maßnahmen oder Einstellungen erforderlich. Unter einem "unrunden" Querschnitt versteht man in diesem Falle jede Querschnittsform, welche von der Kreisform abweicht. Das bedeutet mit anderen Worten aber auch, daß der Querschnitt zumindest teilweise durch einen Kreisbogen begrenzt sein kann. Wenn es sich aber bspw. um einen Vierkant-Wellenquerschnitt handelt, so kann der Querschnitt des zugehörigen Lochs der Reibscheibe oder Reibscheiben durchaus auch ein Achteck sein. Eine besonders einfache Querschnittsausbildung ergibt sich hinsichtlich der Herstellung dadurch, daß man die Welle an einer Stelle etwas abflacht und die Bohrung dementsprechend durch einen Kreisbogen und eine dessen Enden verbindenden Sehne festgelegt ist. Dabei entspricht natürlich der Durchmesser des Kreises dem vollen Wellendurchmesser.

Wenn man also den Formschluß zwischen der Welle und den wellenseitigen Reibscheiben jeder Reibscheibenpaarung durch Drehausrichten und anschließendes Aufschieben erreicht, müssen die radseitigen Reibscheiben in anderer Weise drehfest mit dem Hohlkörper kuppelbar sein. Dabei soll aber auch diese drehfeste Verbindung auf einfache Weise erfolgen können. Eine diesbezügliche Weiterbildung der Erfindung beschreibt Anspruch 3. Jede radseitige, also drehfest mit dem Rad zu kuppelnde Reibscheibe, welche die andere Hälfte der Reibpaarung bildet, wird hierbei über eine axiale Steckbewegung mit dem Rad- bzw. Hohlkörper drehfest verbunden, wobei zweckmäßigerweise die Zapfen- und die Lochzahl jeder Zapfen-Loch-Verbindung gleich sind. Im übrigen achtet man selbstverständlich auch bei dieser Rutschkupplung darauf, daß in bekannter Weise die wellenseitigen und die radseitigen Reibscheiben jeweils etwa gleich dimensioniert sind. Jede radseitige Reibscheibe weist in weiterer Ausgestaltung der Erfindung zwei um 180° versetzte, zum zentrischen Loch konzentrisch angeordnete Bohrungen für die Zapfen-LochVerbindung auf. Demnach befinden sich die zugehörigen Zapfen am Rad. Auf die Zapfen steckt man die jeweils zuzuordnende Reibscheibe auf, um die drehfeste Verbindung zwischen dem Rad und dieser radseitigen Reibscheibe herzustellen.

Der Hohlkörper besteht gemäß einer besonders bevorzugten Variante der Erfindung aus einem im wesentlichen topfförmigen Grundkörper und einem Deckel. Letzterer verschließt den "Topf" im Mündungsbereich. Man erhält auf diese Weise die kompakte Bauform und zugleich auch eine geschützte Unterbringung der Reibscheibenpaare.

Die Zapfen der Zapfen-Loch-Verbindungen können bei einem derart gestalteten Hohlkörper in sehr vorteilhafter Weise innen am Topfboden sowie an der Innenseite des Deckels angebracht, insbesondere angeformt sein.

Eine weitere Ausbildung der Erfindung ergibt sich aus Anspruch 4. Mit dem Anbringen des Deckels am topfförmigen Grundkörper wird zugleich die Belastungsfeder zwischen den beiden Reibscheibenpaaren gespannt. Es ist leicht einsehbar, daß man bspw. durch Zuordnung wenigstens einer zusätzlichen Scheibe zu mindestens einem der beiden Federenden die Federspannung erhöhen kann.

Wie bereits mehrfach erläutert, kann diese Rutschkupplung auch in der Weise benutzt werden, daß man das Rad mit dem Antrieb verbindet und die Welle eine Abtriebswelle darstellt. In diesem Falle ist es dann von besonderem Vorteil, wenn der Topfmantel gemäß Anspruch 5 mit einer Außenverzahnung versehen ist. Ein entsprechender Zahnriemen stellt dann die formschlüssige Verbindung zwischen dem als Rad dienenden Grundkörper und einem angetriebenen, in gleicher Weise außen verzahnten, vom Motor antreibbaren Rad her. Ein Außenbund kann diesen Riemen in axialer Richtung sichern. Denkbar ist auch die Ausbildung in der Art einer Seilscheibe mit zwei Außenbunden.

Damit die Belastungsfeder ihre Kraft gleichmäßig auf die Reibscheibenpaarungen überträgt, sieht eine weitere Ausgestaltung der Erfindung vor, daß die Belastungsfeder eine von der Welle axial durchsetzbare Zentrierbüchse konzentrisch umgibt.

Sowohl für die Montage also auch für die Reparatur oder Wartung der Rutschkupplung ist es von besonderem Vorteil, daß der topfförmige Grundkörper über eine bajonettartige Verbindung mit dem Deckel lösbar verbunden ist. Durch Öffnen der bajonettartigen Verbindung kann man den Deckel abnehmen, d.h. dieser wird bei geöffnetem Bajonett durch die Kraft der Belastungsfeder automatisch axial angehoben. Für die Montage des Deckels benötigt man keinerlei Spezialwerkzeug, vielmehr muß nur gewährleistet sein, daß man den Deckel bei gleichzeitigem Spannen der Belastungsfeder in einer für das nachfolgende Drehen geeignete Aufschiebestellung auf der Welle bringt und außerdem muß die Bajonettverbindung so ausgestaltet sein, daß sie durch die Federkraft nicht gelöst werden kann. Soll die bajonettartige Verbindung geöffnet werden, so muß man zunächst den Deckel gegen den Widerstand der Belastungsfeder noch etwas eindrücken und anschließend um das notwendige Maß drehen. Federunterstützt kann der Deckel daraufhin axial abgenommen werden.

Die spezielle Ausbildung der bajonettartigen Verbindung ergibt sich derart, daß am Topfrand des Grundkörpers mehrere, insbesondere gleichmäßig am Umfang verteilte, radial nach innen ragende Zungen befinden und der Deckel an seinem Randbereich eine mindestens dementsprechende Anzahl etwa gleich dimensionierter Randausnehmungen aufweist. Sowohl die dort erwähnten Randausnehmungen als auch die Zungen des Grundkörpers haben in bevorzugter Weise eine etwa rechteckige Form.

Eine weitere Ausführungsform der Erfindung kennzeichnet sich dadurch, daß sich an der Außenfläche des Deckels jeweils zwischen zwei Randausnehmungen mindestens je eine Rastvertiefung zur Aufnahme einer Grundkörper-Zunge befindet. Diese Aufnahmen ermöglichen einen drehfesten Eingriff der Grundkörper-Zungen und dadurch ein sicheres Schließen des Gehäuses der Rutschkupplung. Ihre Tiefe kann so gewählt werden, daß der Deckel bspw. außen bündig mit dem Grundkörper abschließt.

Eine in diese Richtung zielende Weiterbildung gestaltet sich so, daß jeweils mindestens zwei im Winkel gegeneinander versetzte Rastvertiefungen am Deckel angebracht sind, wobei die Zahl der Rastvertiefungen ein ganzes Vielfaches der Zahl der Grundkörper-Zungen beträgt, und daß eine Gruppe von Rastvertiefungen in Achsrichtung der Kupplung gesehen tiefer ist als die oder jede andere Gruppe. Sie ermöglicht eine besonders einfache, rasch durchzuführende, keinerlei besondere Werkzeuge erfordernde Veränderung der Federspannung und damit auch des maximal zu übertragenden Drehmoments dieser Rutschkupplung. Vor allen Dingen muß die Rutschkupplung zu diesem Zwecke nicht geöffnet werden, vielmehr reicht es aus, wenn man den Deckel ausgehend von einer ersten Verraststellung um einen vorgesehenen Winkelbetrag von bspw. 30° auf der Welle dreht und anschließend wieder mit dem Grundkörper verrastet.

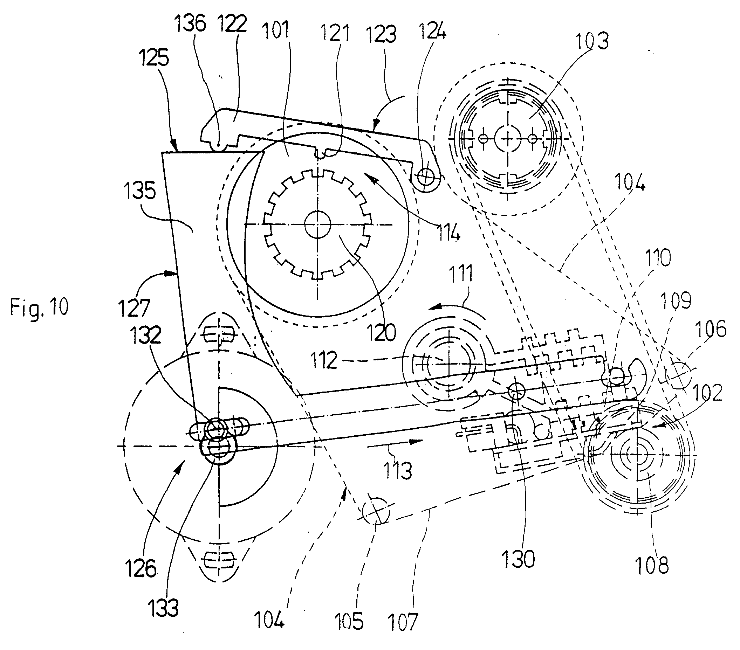

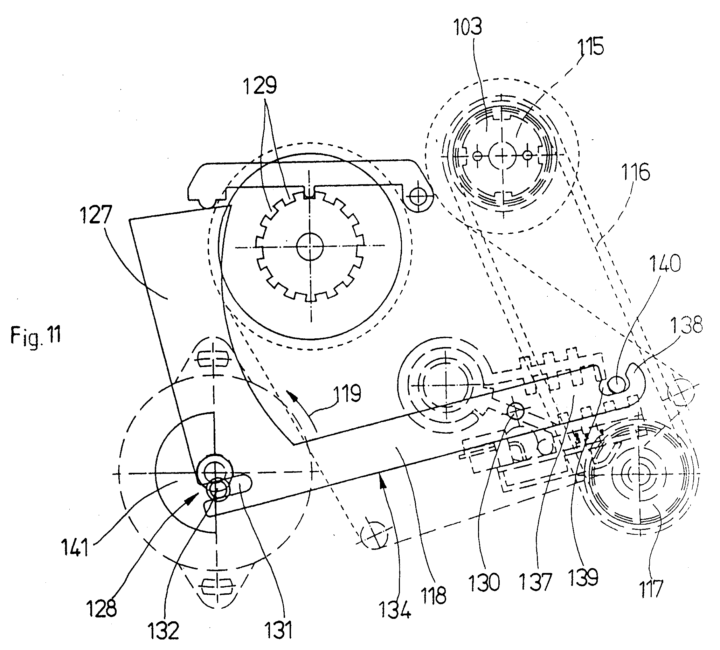

Im folgenden wird die Erfindung anhand der Zeichnungen näher erläutert. Hierbei stellen dar
Figur 1 einen Längsmittelschnitt durch die Rutschkupplung mit montierter Welle,
Figur 2 eine Ansicht des Hohlkörper-Grundkörpers in Pfeilrichtung II der Figur 1,
Figur 3 eine Ansicht einer wellenseitigen Reibscheibe,
Figur 4 eine Draufsicht auf die Außenseite des Deckels des Hohlkörpers,
Figur 5 eine Ansicht einer radseitigen Reibscheibe,
Figur 6 eine zweite Ausführungsform des Deckels in einer Darstellung analog Figur 4 und die
Figuren 7,8 und 9 Schnitte gemäß den Linien VII-VII, VIII-VIII und IX-IX der Figur 6,
Figur 10 in der Seitenansicht einen Ausschnitt aus einer Thermotransferdruckmaschine im Bereich von Thermodruckkopf und Bandantrieb in der Arbeitsstellung, und
Die Rutschkupplung dient zur Übertragung eines Drehmoments von einer angetriebenen Welle 1 auf ein Rad 2 oder umgekehrt von einem angetriebenen Rad 2 auf eine Welle 1. Ihre konkrete Anbringung in einer Druckmaschine wird später anhand der Figur 10 eingehender erläutert. Das Rad 2 ist konzentrisch zur Welle 1 angeordnet oder wie beim Ausführungsbeispiel zentrisch von der Welle 1 durchsetzt. Der Begriff "Rad" ist hierbei in weitestem Sinne zu verstehen. Beim Ausführungsbeispiel ist das Rad 2 ein rotationssymmetrischer Hohlkörper, der aus einem topfförmigen Grundkörper 3 und einem Deckel 4 besteht. Im Innern dieses Rades 2 oder Hohlkörpers befinden sich beim Ausführungsbeispiel zwei Paare axial federbelasteter Reibscheiben 5 und 6 von denen jeweils eine, nämlich die wellenseitige Reibscheibe 5 drehfest mit der Welle 1 verbunden ist, während die andere Reibscheibe jedes Reibscheibenpaares, nämlich die radseitige Reibscheibe 6 mit dem Deckel 4 bzw. dem Grundkörper 3 drehfest verbunden ist. Die Reibscheiben jedes Reibscheibenpaares 5,6 werden mittels einer Feder 7, welche vorzugsweise eine Schraubendruckfeder ist und die Welle 1 konzentrisch umgibt, aneinander gepreßt. Innerhalb dieser Schraubendruckfeder 7 befindet sich beim Ausführungsbeispiel eine Zentrierbüchse 8.

Die Welle 1 ist an ihrem äußeren Ende mit einer Abflachung 9 versehen. Aus diesem Grunde ist das mittige Loch 10 ebenfalls nicht kreisrund, sondern durch einen Kreisbogen und eine Sehne begrenzt. Damit kann die wellenseitige Reibscheibe 5 nur in einer einzigen Dreh-Zuordnung auf die Welle 1 aufgeschoben werden. Andererseits wird aber die derart aufgeschobene wellenseitige Reibscheibe 5 auf diese Weise drehfest mit der Welle 1 gekuppelt und macht deren Umdrehung grundsätzlich mit.

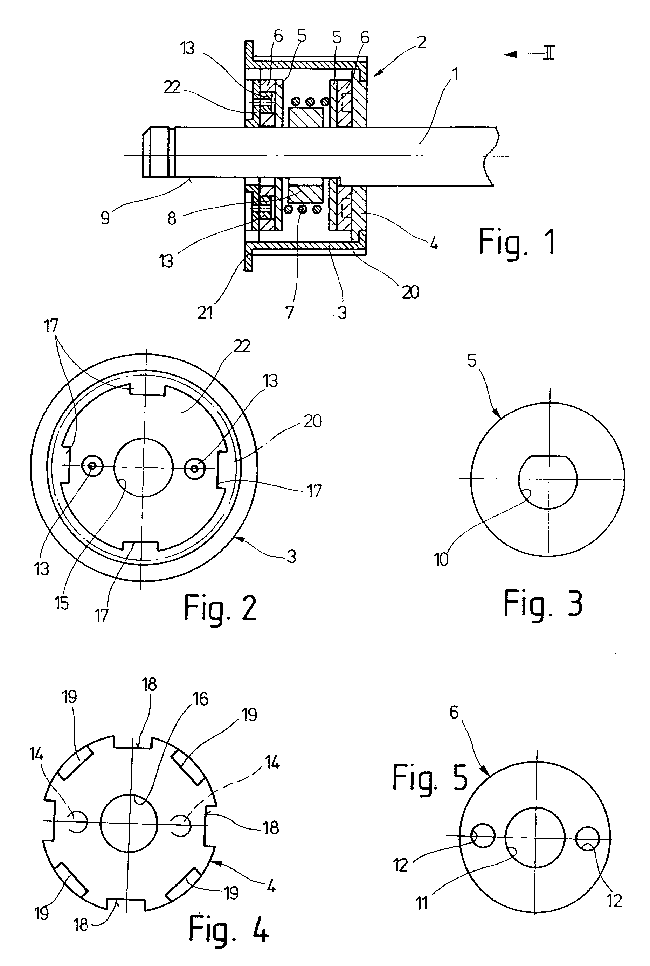

Auch die radseitigen Reibscheiben 6 sind drehfest gehalten. Gemäß Figur 5 haben sie ein zentrisches Loch 11, welches als kreisrunde Bohrung ausgeführt ist mit einem Durchmesser, welcher demjenigen des vollen Durchmessers der Welle 1 entspricht. Um 180° versetzt bzw. einander gegenüberliegend sind noch zwei weitere, im Durchmesser kleinere Bohrungen 12 konzentrisch zum Loch 11 angebracht. Jedes bildet den einen Teil einer Zapfen-Loch-Verbindung zum drehfesten Halten der radseitigen Reibscheibe 6. Der zugehörige Zapfen 13 jeder Bohrung 12 befindet sich entweder an der Innenseite des Deckels 4 oder des Bodens 22 des topfförmigen Grundkörpers 3. Bevorzugterweise sind die Zapfen 13 einstückig mit dem Topfboden 12 gefertigt. Entsprechendes gilt für die Zapfen 14 des Deckels 4. Sowohl am Boden 22 als auch am Deckel 4 ist jeweils noch eine zentrische Bohrung 15 bzw. 16 vorhanden, deren Querschnitt dem vollen Querschnitt der Welle 1 entspricht.

Der Deckel 4 ist über einen bajonettartigen Verschluß mit dem topfförmigen Grundkörper 3 kuppelbar und zwar im Bereich des Topfrandes. Dort befinden sich beim Ausführungsbeispiel vier radial nach innen ragende, gleichmäßig am Umfang verteilte Zungen 17. Der Deckel 4 hat gemäß Figur 4 vier dementsprechend angeordnete und dimensionierte Randausnehmungen 18. Es ist leicht einzusehen, daß in entsprechender Drehausrichtung der Deckel 4 an den Zungen 17 vorbei ins Innere des Hohlkörpers verschoben werden kann, wobei die Feder 7 gespannt und die Reibpaarungen 5,6 fest aneinander gepreßt werden. Wenn man daraufhin den Deckel beim ersten Ausführungsbeispiel um 45° dreht und freigibt, so drückt ihn die Feder 7 von unten her an die Innenseite der Zungen 17. Damit diese Dreheinstellung sicher gefunden und auch beibehalten werden kann, sind gemäß Figur 4 an der Außenfläche des Deckels 4 vier gleichfalls um 90° gegeneinander versetzte, mittig zu den Randausnehmungen 18 angeordnete Rastvertiefungen 19 angebracht. Sie sind formlich auf die Zungen 17 abgestimmt, so daß diese voll in die Rastvertiefungen 19 eintreten können.

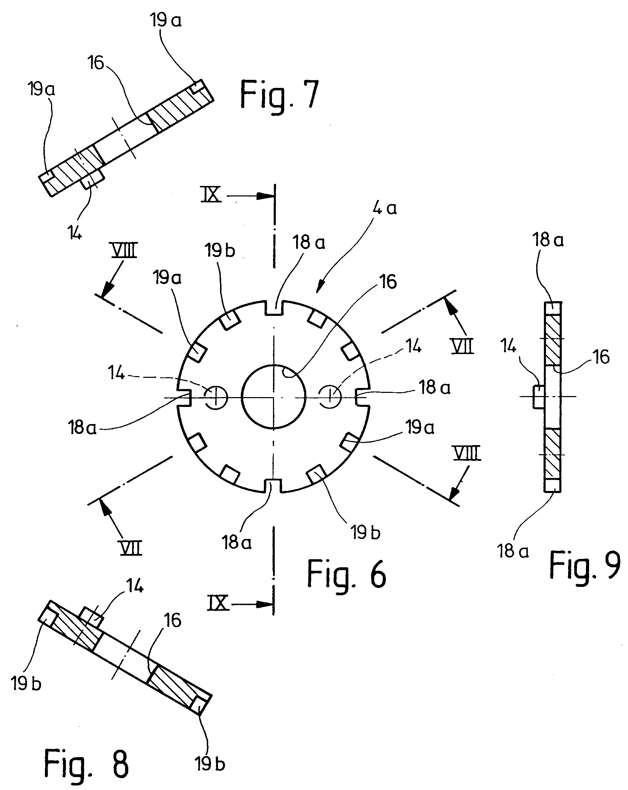

Gemäß dem zweiten Ausführungsbeispiel des Deckels 4a sind zwischen zwei benachbarten Randausnehmungen 18a jeweils zwei im Winkel gegeneinander versetzte Rastvertiefungen 19a,19b vorgesehen, d.h. die Zahl der Rastvertiefungen ist dort doppelt so hoch wie die Zahl der Zungen 17 des Grundkörpers 3. Wie ein Vergleich der Figuren 4 und 6 zeigt, können in diesem Falle die Randausnehmungen 18a kleiner sein als die Randausnehmungen 18 beim Deckel 4 der Figur 4. Auf jeden Fall stellt aber die Zahl der Rastvertiefungen 19a,19b immer ein ganzes Vielfaches der Randausnehmungen 18a dar. Gemäß Figuren 7 und 8 sind die Rastvertiefungen 19b tiefer als die Rastvertiefungen 19a, weswegen der Deckel 4 beim Eintreten der Zungen 17 in die Rastvertiefungen 19b weiter nach außen verschoben wird. Dies bedeutet, daß die Federspannung größer ist, wenn die Zungen 17 in die Rastvertiefungen 19a eingreifen, bezogen auf die Rastvertiefungen 19b. Andererseits kann man auf diese Art und Weise die Federspannung problemlos und ohne Benutzung besonderer Werkzeuge rasch verändern und dadurch das zu übertragende Drehmoment in Stufen auf einfache Art und Weise vergrößern oder verringern.

Der Topfmantel des Grundkörpers 3 ist mit einer Außenverzahnung 20 versehen. Es kann sich dabei um eine für einen Zahnriemen geeignete Außenverzahnung handeln. Über diesen Zahnriemen kann man dann das Rad 2 antreiben. Das Drehmoment wird über die Reibpaarungen 5,6 auf die Welle 1 übetragen. Diese kann bspw. eine nicht dargestellte Spule tragen, auf welcher ein Band, insbesondere ein sog. Thermotransferribbon aufgewickelt werden soll. Dieses Band wird von einer anderen Spule bspw. einer Kassette abgespult und dabei über eine Druckwalze geführt. Wenn aus irgendwelchen Gründen die Spule, von der das Band abgewickelt werden soll, plötzlich abgestoppt wird, so darf das Band nicht abreißen. Dies verhindert man mit Hilfe der auf die Welle 1 aufgesetzten erfindungsgemäßen Rutschkupplung.

Am einen Ende der Außenverzahnung 20 befindet sich gemäß Figur 1 ein Außenbund 21. Er verhindert das axialen Ablaufen des erwähnten Antriebsriemens. In nicht dargestellter Weise kann man selbstverständlich an beiden Enden der Außenverzahnung 20 einen solchen Außenbund vorsehen, so daß insgesamt eine Art Seilscheibe entsteht.

Anhand der Figur 10 ist erkennbar, daß das Thermotransferband 104 von einer ersten Spule 101 abgewickelt wird, den Druckbereich 102 durchläuft und dann auf einer zweiten Spule 103 aufgewickelt wird. Vorzugsweise befinden sich die beiden Spulen 101 und 103, einschließlich der Umlenkrollen oder -walzen 105 und 106, in einer Farbbandkassette. Zwischen den Umlenkwalzen 105 und 106 ist sich das wirksame Trum 107 des Thermotransferbands 104. Es wird über eine Gegendruckrolle 108 der im einzelnen nicht näher dargestellten Druckmaschine geführt. Zwischen dem Thermotransferband 104 und der Gegendruckrolle 108 befindet sich noch ein nicht dargestellter Aufzeichnungsträger, z.B. ein Trägerband mit zu bedruckenden Etiketten. Beim Drucken liegt ein Thermodruckkopf 109 auf dem durchlaufenden, arbeitenden Trum 107 des Thermotransferbands 104 auf und drückt, unter Zwischenschaltung des erwähnten Aufzeichnungsträgers, dieses fest an die Gegendruckrolle 108 an. Die Anpreßkraft wird mittels einer der Übersichtlichkeit wegen nicht eingezeichneten, den schwenkbaren Arm 110 niederdrückenden Schraubendruckfeder aufgebracht. Der schwenkbare Arm 110 trägt den Thermodruckkopf 109. Der erwähnte, durch die Schraubendruckfeder belastete Arm 110 ist im Sinne des Doppelpfeils 111 um die Achse 112 verschwenkbar.

Die Antriebsseite der Rutschkupplung 115 wird beim Ausführungsbeispiel der Druckmaschine über ein endloses Antriebsglied 116, beispielsweise einen Zahnriemen, mittels eines Elektromotors 117 angetrieben. Während des Druckjobs bleibt der Elektromotor 117 stets eingeschaltet, so daß auch die Antriebsseite der Rutschkupplung 115 ständig in Drehung versetzt wird. Die Rutschkupplung 115 überträgt das Drehmoment von ihrer Antriebs- auf ihre Abtriebsseite, auf der sich die zweite Spule 103 befindet. Sie verhindert ein Durchreißen des Thermotransferbandes, indem sie das auf die zweite (Aufwickel-) Spule (103) wirkende Drehmoment begrenzt.

Ein vergleichsweise plötzliches Abstoppen des Thermotransferbands 104 nach dem Drucken der letzten auszugebenden Zeile erreicht man durch eine Arretierungsvorrichtung 114. Die Druckmaschine benötigt zum Drucken im Thermotransferverfahren grundsätzlich eine entsprechende elektronische Steuerung mit Rechner. Diese kann nun dazu herangezogen werden - weil sie auch über alle notwendigen Daten verfügt - die Arretierungsvorrichtung 114 immer dann in Arbeitsstellung zu bringen, wenn das Thermotransferband 104 nicht weiterlaufen soll und stets dann freizugeben, wenn der Aufzeichnungsträger soweit durchgelaufen ist, daß die nächste zu bedruckende Stelle im Druckbereich 102 angekommen ist.

Aus verschiedenen Gründen, nicht zuletzt aber um ein Zerreißen des Thermotransferbands 104 während seines Stillstands zu vermeiden, muß während der Stillstandsphasen der Anpreßdruck, mit welchem der Thermodruckkopf 109 an die Gegendruckrolle 108 angepreßt wird, aufgehoben werden. Dies geschieht auf einfache Art und Weise, beispielsweise dadurch, daß über die Steuerung der Druckmaschine zum gegebenen Zeitpunkt ein Betätigungsglied 118 in Pfeilrichtung 119 verschwenkt wird, welches mit dem Schwenkarm 110 in nachstehend noch näher erläuterter Weise gekuppelt ist und infolgedessen letzteren in gleichem Drehsinne mitnimmt, wodurch dann der Thermodruckkopf 109 von der Gegendruckrolle 108 abgehoben wird. Rein theoretisch könnte man natürlich auch die Gegendruckrolle 108 nach unten hin absenken, jedoch wird der erst genannten Alternative aus vielerlei Gründen der Vorzug gegeben.

Die erste Spule 101 ist drehfest mit einem außenverzahnten Rad 120 verbunden. Darüber befindet ein zustellbarer Verrastzahn 121. Er wird von einem Schwenkarm 122 gehalten und ist vorzugsweise einstückig damit gefertigt. Der Schwenkarm 122 kann im Sinne des Doppelpfeils 123 um eine Achse 124 verschwenkt werden. Während des Druckens befindet sich der Schwenkarm 122 in der aus Figur 10 ersichtlichen Drehstellung. Er wird in dieser wirkungslosen Stellung von einem steuerbaren Sperrglied 125 gehalten. Mittels eines von der Steuerung der Druckmaschine ebenfalls steuerbaren Antriebs 126 kann der Schwenkarm 122 in die wirksame Stellung überführt werden. Dies geschieht beim Ausführungsbeispiel aber indirekt, und zwar dadurch, daß sich das Sperrglied 125 an einem schwenkbar gelagerten Hebel 127 befindet, der mittels eines Exzenterantriebs 128 verstellbar ist. Der Hebel 127 ist bevorzugterweise ein Winkelhebel, dessen in der Zeichnung oberes Ende das Sperrglied 125 bildet. Sobald dieses Ende abgesenkt wird, folgt der Schwenkarm 122 dieser Bewegung, und dadurch greift dann der Verrastzahn 121 in die nächst-folgende Zahnlücke 129 ein.

Der Hebel 127 ist um eine Achse 130 drehbar. Im Bereich der Winkelecke befindet sich ein randoffener Längsschlitz, in welchen ein Zapfen 132 eingreift. Beide sind Bestandteil des Exzenterantriebs 128. Der Zapfen 132 ist an einem antreibbaren Drehglied 133 angebracht. Dieses führt aber jeweils nur etwa eine halbe Umdrehung durch. Der Längsschlitz erstreckt sich etwa in Längsrichtung des an der Achse 130 angelenkten Winkelschenkels des winkelförmigen Hebels 127. Demzufolge befindet sich das Sperrglied 125 am freien Winkelschenkel 135. Der Schwenkarm 122 mit dem Verrastzahnl 21 ist ein einfacher, schwenkbarer Hebel, der an seinem freien Ende ein vorzugsweise balliges Abstützelement 136 aufweist, welches oben auf der das Sperrglied 125 bildenden Stirnfläche des freien Winkelschenkels 135 aufliegt.

Wenn das Drehglied 133 mit dem Zapfen 132, ausgehend von seiner Drehstellung gemäß Figur 10, beispielsweise im Gegenuhrzeigersinn, um etwa 180° gedreht wird, so verschwenkt der Zapfen 132, der in den Längsschlitz eingreift, den Hebel 127 gleichfalls im Gegenuhrzeigersinn um dessen Drehachse 130. Hierdurch wird einerseits der Thermodruckkopf 109 von der Gegendruckrolle 108 abgehoben und dadurch die Pressung der beiden Bänder im Druckbereich 102 aufgehoben, andererseits auch das Sperrglied 135 abgesenkt, wodurch der Schwenkarm 122 eine Schwenkbewegung im Sinne des Pfeils 123 durchführen kann. Dies führt zu einem Einrasten des Verrastzahns 121 in die nächstfolgende Zahnlücke. Damit ist also das Abstoppen des Thermodruckbands 104 grundsätzlich mit einer Entlastung des Druckkopfes 109 im Druckbereich 102 zwangsgekuppelt.

Die Steuerung für die 180°-Drehbewegung erreicht man mit Hilfe einer Steuerscheibe, welche drehfest mit dem Drehglied 133 gekuppelt ist und einem beispielsweise auf optischer Basis arbeitenden Sensor, welcher die beiden radialen Kanten der Steuerscheibe abtasten kann. In diesem Bereich befindet sich dann eine entsprechende Steuereinheit für den Antriebsmotor 126 des Drehglieds 133.

## Patentansprüche

1. Druckmaschine mit einem an eine Gegendruckrolle (108) federbelastet andrückbaren Druckkopf (109), zwischen dem und der Gegendruckrolle (108) das wirksame Trum (107) eines Druckbands (104) und ein zu bedruckender Aufzeichnungsträger durchlaufen, wobei das Druckband (104) von einer ersten Spule (101) abgewickelt und auf eine zweite Spule (103) aufgewickelt wird, und zwischen einem Antrieb (117) und die zweite Spule (103) und/oder zwischen einem Antrieb (117) und einer am Aufzeichnungsträger anliegenden Antriebsrolle eine Rutschkupplung (115) geschaltet ist, die in einem Rad (2) mit einer konzentrischen Welle (1), auf die ein Drehmoment übertragen wird, angeordnet ist, und wobei zwischen die Welle (1) und das Rad (2) wenigstens ein Paar axial federbelasteter Reibscheiben (5,6) geschaltet ist, **dadurch gekennzeichnet**, daß das Rad (2) als öffenbarer Hohlkörper ausgebildet ist, daß sich alle Elemente (5,6,7) der Rutschkupplung (115) im Innern des Rades (2) befinden, und daß die Welle (1) in die Rutschkupplung (115) einsteckbar ist, wobei die wenigstens eine wellenseitige Reibscheibe (5) formschlüssig mit der Welle (1) verbindbar ist.

2. Druckmaschine nach Anspruch 1, **dadurch gekennzeichnet**, daß zur formschlüssigen Verbindung die Welle (1) zumindest im Bereich der drehfest damit kuppelbaren wellenseitigen Reibscheibe oder Reibscheiben (5) einen unrunden Querschnitt aufweist und das Aufnahmeloch (10) jeder wellenseitigen Reibscheibe (5) an den Wellenquerschnitt insbesondere abschnittsweise angepaßt ist.

3. Druckmaschine nach einem der Ansprüche 1 oder 2, **dadurch gekennzeichnet**, daß jede radseitige Reibscheibe (6) ein zentrisches Loch (11) aufweist, dessen Form dem vollen Querschnitt der Welle (1) entspricht, und daß jede radseitige Reibscheibe (6) über mindestens zwei Zapfen-Loch-Verbindungen (12,14) mit dem Hohlkörper (3,4,4a) drehfest verbindbar ist, wobei die Zapfenlängsachsen parallel zur Wellenlängsachse verlaufen.

4. Druckmaschine nach einem der Ansprüche 1 bis 3, **dadurch gekennzeichnet**, daß der Hohlkörper aus einem im wesentlichen topfförmigen Grundkörper (3) und einem Deckel (4,4a) besteht, wobei mit dem Topfboden (22) und dem Deckel (4,4a) je eine radseitige Reibscheibe (6) drehfest verbunden und jeder eine wellenseitige Reibscheibe (5) zugeordnet ist, wobei sich zwischen den wellenseitigen Reibscheiben (5) eine als Schraubendruckfeder ausgebildete Belastungsfeder (7) befindet.

5. Druckmaschine nach einem der Ansprüche 1 bis 4, **dadurch gekennzeichnet**, daß der Topfmantel des Grundkörpers (3) mit einer Außenverzahnung (20) versehen ist, in die ein Zahnriemen (16) eingreift.

6. Druckmaschine nach einem der Ansprüche 4 oder 5, **dadurch gekennzeichnet**, daß die Belastungsfeder (7) eine von der Welle (1) axial durchsetzbare Zentrierbüchse (8) konzentrisch umgibt.

7. Druckmaschine nach einem der Ansprüche 4 bis 6, **dadurch gekennzeichnet**, daß der topfförmige Grundkörper (3) über eine bajonettartige Verbindung mit dem Deckel (4,4a) lösbar verbunden ist.

8. Druckmaschine nach Anspruch 7, **dadurch gekennzeichnet**, daß sich am Topfrand des Grundkörpers (3) mehrere, insbesondere gleichmäßig am Umfang verteilte, radial nach innen ragende Zungen (17) befinden und der Deckel (4,4a) an seinem Randbereich eine mindestens dementsprechende Anzahl etwa gleich dimensionierter Randausnehmungen (18,18a) aufweist.

9. Druckmaschine nach Anspruch 8, **dadurch gekennzeichnet**, daß sich an der Außenfläche des Deckels (4,4a) jeweils zwischen zwei Randausnehmungen (18a) mindestens je eine Rastvertiefung (19,19a,19b) zur Aufnahme einer Grundkörper-Zunge (17) befindet.

10. Druckmaschine nach Anspruch 9, **dadurch gekennzeichnet**, daß jeweils mindestens zwei im Winkel gegeneinander versetzte Rastvertiefungen (19a,19b) am Deckel (4a) angebracht sind, wobei die Zahl der Rastvertiefungen ein ganzes Vielfaches der Zahl der Grundkörper-Zungen (17) beträgt, und daß eine Gruppe von Rastvertiefungen (19a) in Achsrichtung der Kupplung gesehen tiefer ist als die oder jede andere Gruppe (19b).

11. Druckmaschine nach einem der Ansprüche 5 bis 10, **dadurch gekennzeichnet**, daß die Außenverzahnung (20) an wenigstens einem Ende durch einen Außenbund (21) begrenzt ist.
